# EUROPEAN PATENT APPLICATION

(11) **EP 1 738 979 A1**
(43) Date of publication of application: **03.01.2007**
(21) Application number: 06011368.5
(22) Date of filing: 01.06.2006
(51) Int. Cl.: B60R 22/48, B60R 22/415

(54) **Seat belt retractor and seat belt device having the same**

(30) Priority: 30.06.2005 JP 2005190973; 27.02.2006 JP 2006050419
(71) Applicant: TAKATA CORPORATION, Minato-ku, Tokyo 106-8510 (JP)
(72) Inventor: Yanagi, Eiji, Minato-Ku Tokyo 106-8510 (JP)
(74) Representative: Bertsch, Florian Oliver

(57) **Abstract**

In order to improve a reliability of a belt withdrawn amount sensing unit for detecting a belt withdrawn amount with a high accuracy and more securely sense a fastening of a seat belt, a seat belt retractor is provided, wherein, when a distal end of a protrusion (26a) of a switch lever (26) is in contact with a circumferential surface (25a) of a rotation angle detecting cam wheel (25) which can rotate in integration with a spool (4), a magnet (30) of the switch lever (26) is separated largely from a Hall element (33), so that the Hall element (33) is in an OFF state. On the other hand, when the distal end of the protrusion (26a) of the switch lever (26) is in contact with a circumferential surface (28a) of a convex cam (28), the magnet (30) of the switch lever (26) closely approaches the Hall element (33), so that the Hall element (33) is in an ON state. Accordingly, by sensing a predetermined withdrawn amount of a seat belt (3) withdrawn from a state of the seat belt (3) not being fastened, that is, from a state that the seat belt (3) is entirely retracted, the belt is determined to be fastened.

## Description

### [Technical Field]

The present invention relates to a seat belt retractor for withdrawably retracting a seat belt, and more particularly, to a seat belt retractor having a belt fastening sensing unit for detecting a seat belt withdrawn amount to sense a seat belt fastened state of an occupant and a seat belt device having the seat belt retractor.

### [Background Art]

A conventional seat belt device installed in a vehicle such as a car restrains an occupant with a seat belt at a time of emergency such as a car collision where a large deceleration is exerted on the vehicle so as to prevent the occupant from being thrown out from a seat to protect the occupant. The seat belt device is provided with a seat belt retractor for retracting the seat belt. In the seat belt retractor, the seat belt is retracted to a spool when the seat belt is not fastened, and the seat belt is withdrawn and fastened to the occupant when the seat belt is fastened. At the aforementioned time of emergency, a lock member of the seat belt retractor operates to stop a rotation of the spool in a belt withdrawn direction thereof, so that the withdrawal of the seat belt is prevented. By doing so, at the time of emergency, the seat belt can securely restrain and protect the occupant.

In order to securely restrain the occupant at the time of emergency, the fastening of the seat belt needs to be securely performed by the occupant. For the reason, the conventional seat belt device is provided with a seat belt fastening sensing unit. A seat belt device having such a seat belt fastening sensing unit has been proposed (see Japanese Examined Patent Application Publication No. 3-70655). The seat belt device includes a seat belt fastening sensing unit for sensing the fastening of the seat belt by using a buck switch embedded in a buckle, which is turned on when the tongue is engaged with the buckle and is turned off when the tongue is released from the buckle.

According to the seat belt device disclosed in Japanese Examined Patent Application Publication No. 3-70655, when the occupant withdraws the seat belt from the seat belt retractor and engages the tongue with the buckle, the buckle switch turns on, so that the fastening of the seat belt by the occupant is sensed.

On the other hand, there are provided various layouts of vehicle seats to the recent vehicles. Particularly, vehicles of which vehicle seat is detachable from the chassis are developed. Therefore, in a case where a fastening sensing unit is applied to such a vehicle for obtaining information of the occupant's fastening of the seat belt by using on and off signals of the buckle switch embedded in the buckle in the seat belt device disclosed Japanese Examined Patent Application Publication No. 3-70655, there is a need for a connection unit to connect and disconnect a wire harness, which electrically connects the buckle switch with a CPU disposed in the chassis, between the buckle side and the chassis side because the buckle is generally attached to the vehicle seat.

Therefore, there has been proposed a seat belt device having a mechanical seat belt retracted amount sensing switch as well as the buckle switch embedded in the buckle. The mechanical seat belt retracted amount sensing switch senses a belt retracted amount retracted to a bobbin of a seat belt retractor, thereby sensing the occupant's fastening of the seat belt. (See Japanese Unexamined Patent Application Publication No. 9-82171).

In the seat belt device disclosed in Japanese Unexamined Patent Application Publication No. 9-82171, the seat belt retracted amount sensing switch includes a movable member which is always in contact with a circumferential surface of the seat belt retracted to a bobbin of the seat belt retractor to be displaced depending on variation in a diameter of the retracted belt according to the belt retracted amount and which has a sliding contact point and a fixed contact point which the sliding contact point is in contact with when the movable member is displaced by a predetermined amount. In addition, when the sliding contact point is in contact or non-contact with the fixed contact point, the seat belt retracted amount sensing switch is in the ON or OFF state such that it is sensed whether or not the seat belt is retracted by a predetermined amount.

Since the seat belt retracted amount sensing switch is attached to the seat belt retractor fixed to the chassis, even in a case where it is applied to the aforementioned vehicle of which vehicle seat is detachable from the chassis, there is no need for a connection unit for a wire harness between the buckle side and the chassis side.

However, in the seat belt retracted amount sensing based on the variation in the diameter of the retracted belt, the diameter of the retracted belt varies according to a seat belt retracted state in the bobbin irrespective of the same seat belt retracted amount, so that there is a problem in that a good accuracy of turning on and off of the seat belt retracted amount sensing switch cannot be obtained. In addition, in such a mechanical switch, there is a problem in that it is difficult to determine whether or not the contact point of the switch is in a normal state.

On the other hand, the seat belt device disclosed in the aforementioned Japanese Examined Patent Application Publication No. 3-70655 are provided with a rotation angle detecting ratchet wheel which is integrally fixed to a retracting shaft so as to rotate therewith and a displacement detecting device for detecting a rotation displacement of the rotation angle detecting ratchet wheel by using two photo couplers In the seat belt device, a CPU counts pulse signals for the optical rotation displacement detection transmitted from the two photo couplers of the displacement detecting device to sense a rotation direction and a rotation angle of the retracting shaft, so that the retracted amount of the seat belt, that is, a belt retracted amount can be sensed. Since there is no contact point in such an optical belt retracted amount detecting, the aforementioned problems of the mechanical switch having the contact point do not occur.

### [Problems to be Solved by the Invention]

However, in the non-contact optical belt retracted amount sensing disclosed in Patent Document 1, when the photo coupler is stained with contaminants in a long time use, the light amount of the photo coupler is lowered due to the contaminants. As a result, there is a problem in that it is difficult to sense the belt retracted amount with a high accuracy and a reliability of the optical belt retracted amount sensing unit is lowered.

In addition, since any signal cannot flow in the OFF state thereof in the aforementioned belt retracted amount sensing using the mechanical switch and the aforementioned optical belt retracted amount sensing using the photo coupler, disconnection of the wire harness or the like cannot be detected in the OFF state thereof, so that a reliability of the belt retracted amount sensing can be lowered. Therefore, resistors are considered to be disposed parallel to the contact points of the switch or the photo coupler, so that a current is allowed to flow by bypassing the contact points of the switch or the photo coupler in the OFF state thereof in order to detect disconnection in the OFF state, thereby improving a reliability of the belt retracted amount sensing. However, in the case where the resistors are inserted, although the disconnection can be detected, the contact point of the switch or the photo coupler cannot be diagnosed, and the reliability of the belt retracted amount sensing cannot be securely and sufficiently improved. In addition, when the resistors are used, the number of parts increases, so that there is a problem in cost increase.

The present invention is contrived in consideration of the aforementioned problems, and an object of the present invention is to provide a seat belt retractor capable of improving a reliability of a belt withdrawn amount sensing unit for detecting a belt withdrawn amount with a high accuracy, more securely sensing a fastening of a seat belt, and suppressing an increase in the number of parts and a seat belt device having the seat belt retractor.

### [Means for Solving the Problems]

According to the present invention, this object is achieved by a seat belt retractor as defined in claim 1 and a seat belt device as defined in claim 4. The dependent claims defined preferred and advantageous embodiments of the invention.

In order to solve the aforementioned problems, a seat belt retractor according to an aspect of the invention comprises at least a spool for withdrawably retracting a seat belt and a rotation angle detecting unit for detecting a rotation angle of the spool, wherein the rotation angle detecting unit is a belt withdrawn amount sensing unit for sensing a predetermined seat belt withdrawn amount by detecting a predetermined rotation angle of the spool in a belt withdrawn direction with reference to an entirely retracted state of the spool at a time of the seat belt not being fastened, and wherein the belt withdrawn amount sensing unit comprises a Hall switch which includes a magnet for moving according to a predetermined rotation amount of the spool in the belt withdrawn direction of the spool and a Hall element which is controlled to be turned on or off by the magnet.

In addition, a seat belt retractor according to a preferred embodiment comprises a switch lever of which one end portion is swingably supported by a frame which rotatably supports the spool or a fixing member to which the frame is fixed, wherein the magnet is attached to the other end portion of the switch lever, and wherein the switch lever is integrally and rotatably formed with the spool and controlled to swing by a rotation angle detecting cam wheel having a convex cam on a circumference thereof, so that, when the spool is in the entirely retracted state, the switch lever allows the magnet to be separated largely from the Hall element to turn off the Hall switch, and at a time when the seat belt is withdrawn by a predetermined withdrawn amount with reference to the entirely retracted state of the spool, the convex cam allows the switch lever to operate and the magnet to closely approach the Hall element to turn on the Hall switch.

In addition, a seat belt retractor according to another preferred embodiment comprises a switch lever of which one end portion is swingably supported by a frame which rotatably supports the spool or a fixing member to which the frame is fixed, wherein the magnet is attached to the other end portion of the switch lever, and wherein the switch lever is integrally and rotatably formed with the spool and controlled to swing by a rotation angle detecting cam wheel having a concave cam on a circumference thereof, so that, when the spool is in the entirely retracted state, the switch lever allows the magnet to closely approach the Hall element to turn off the Hall switch, and at a time when the seat belt is withdrawn by a predetermined withdrawn amount with reference to the entirely retracted state of the spool, the concave cam allows the switch lever to operate and the magnet to be separated largely from the Hall element to turn on the Hall switch.

In addition, a seat belt device according to another aspect of the invention comprises at least: a seat belt retractor for retracting a seat belt; a tongue which is slidably supported by the seat belt withdrawn from the seat belt retractor; and a buckle which the tongue is releaseably engaged with, wherein the withdrawal of the seat belt is prevented by the seat belt retractor at a time of emergency, thereby restraining an occupant, and wherein the seat belt retractor is the seat belt retractor according to any one of the above-mentioned seat belt retractors.

### [Advantages]

In the seat belt retractor having such a construction according to the present invention and the seat belt device having the seat belt retractor, since the Hall switch is used for the rotation angle detecting unit constituting the belt withdrawn amount sensing unit, even in a case where the Hall switch is stained with contaminants, it is possible to suppress influence of the contaminants on detection of the rotation angle of the spool. Therefore, in a long time use, the rotation angle of the spool can be sensed with a high accuracy, and a reliability of the rotation angle detecting unit can be improved. In addition, since the rotation angle detecting unit is used as a belt withdrawn amount detecting unit, it is possible to more securely detect the fastening of the seat belt by the occupant.

In addition, since the Hall switch allows a small current to flow in the OFF state thereof, the small current is set so as to flow in the OFF state thereof and a relatively large current is set so as to flow in the ON state thereof, so that it is possible to securely sense the belt withdrawn amount and securely detect the disconnection in the OFF state thereof. By doing so, the reliability of the belt withdrawn amount sensing can be further improved. In addition, since there is no need to use resistors unlike the aforementioned conventional case, it is possible to suppress increase in the number of parts and to reduce costs.

In addition, since the rotation angle detecting unit is attached to the seat belt retractor fixed to the chassis, even in a case where it is applied to the aforementioned conventional vehicle of which vehicle seat is detachable from the chassis, there is no need for a connection unit for wire harness between the buckle side and the chassis side.

### [Best Mode for Carrying Out the Invention]

### [Brief Description of the Drawings]

Fig. 1 is a view showing a portion of a construction of a seat belt retractor according to an embodiment of the present invention.
Fig. 2 is a schematic view showing a rotation angle detecting cam wheel and a switch lever in a rotation angle detecting unit according to the embodiment shown in Fig. 1.
Fig. 3 is a view for explaining an operation of a Hall switch, that is, a rotation angle detecting unit according to the embodiment shown in Fig. 1, wherein Fig. 3(a) is a view showing an OFF state of the Hall switch and Fig. 3(b) is a view showing an ON state of the Hall switch.
Fig. 4 is a view showing a Hall element and a wiring circuit in the Hall switch according to the embodiment shown in Fig. 1.
Fig. 5 is a schematic view showing an embodiment of a seat belt device to which the seat belt retractor according to the embodiment shown in Fig. 1 is applied.
Fig. 6 is a view showing a seat belt retractor according to another embodiment of the present invention, wherein Fig. 6(a) is a view showing an OFF state of the Hall switch same as that of Fig. 3(a) and Fig. 6(b) is a view showing an ON state of the Hall switch same as that of Fig. 3(b).
Fig. 7 is a view showing a Hall element and a wiring circuit in the Hall switch according to the embodiment shown in Fig. 6.

Now, embodiments for carrying out the present invention will be described with reference to the accompanying drawings.

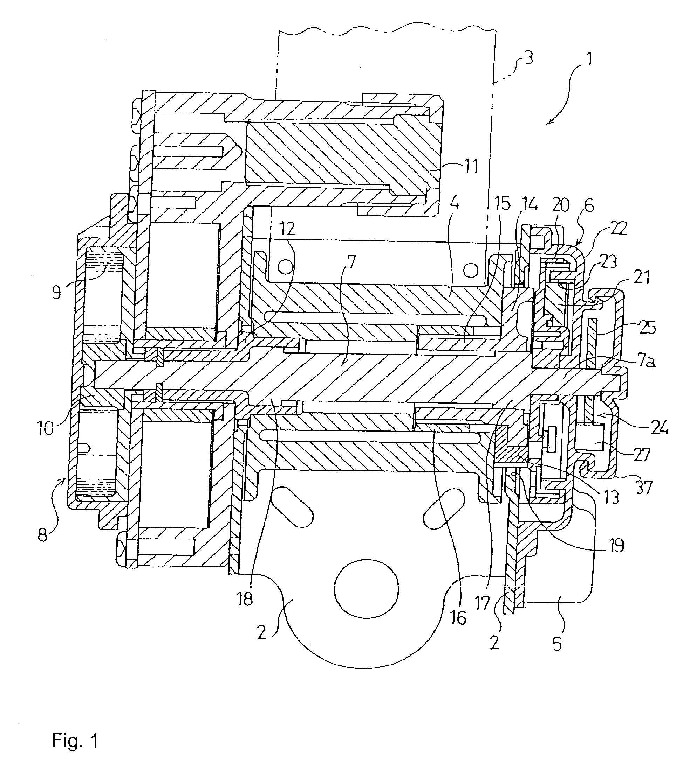

FIG. 1 is a longitudinal cross sectional view showing a seat belt retractor according to an embodiment of the present invention.
As shown in FIG. 1, a construction of the seat belt retractor 1 according to the embodiment is almost the same as that of a seat belt retractor disclosed in, for example, Japanese Unexamined Patent Application Publication No. 2001-58559. Firstly, the same construction as that of the disclosed seat belt retractor will be described in brief.

In Fig. 1, reference numeral 1 denotes a seat belt retractor. Reference numeral 2 denotes a U-shaped frame. Reference numeral 3 denotes a seat belt. Reference numeral 4 denotes a spool which is rotatably supported between both side walls of the U-shaped frame 2 to retract the seat belt 3. Reference numeral 5 denotes a deceleration sensing unit which operates by sensing a large deceleration of a vehicle at a time of emergency. Reference numeral 6 denotes a lock member which is operated by a deceleration sensing unit 5 to prevent at least a rotation of the spool 4 in a belt withdrawn direction thereof. Reference numeral 7 denotes a torsion bar which is inserted into a center of the spool 4 to axially pass through the spool with a play and rotatably connect the spool 4 and the lock member 6. Reference numeral 8 denotes a spring member which constantly urges the spool 4 in a belt retracted direction through a bush 10 by an elastic force of the spiral spring 9. Reference numeral 11 denotes a pre-tensioner which operates at the aforementioned time of emergency to generate a belt retracting torque. Reference numeral 12 denotes a bush for transmitting the seat belt retracting torque of the pre-tensioner 11 to the spool 4.

The lock member 6 includes a locking base 14 which can integrally rotate with a first torque transmission shaft 17 of the torsion bar 7 and which swingably supports a pawl 13 and a locking gear 20 which is supported to a protrusion shaft 7a of the torsion bar 7 to rotate in integration with the torsion bar 7 in a normal state and to stop by an operation of the deceleration sensing unit 5 at the time of emergency so as to relatively rotate with respect to the torsion bar 7. Here, at the time of emergency, due to the relative rotation thereof, the pawl 13 is latched to an inner tooth 19 of a side wall of the frame 2, so that the rotation of the locking base 14 in the seat belt withdrawn direction is prevented. A external thread shaft portion 15 is formed in the locking base 14, and a nut-shaped stopper member 16 which rotates in integration with the spool 4 is engaged with the external thread shaft portion 15 in a screw manner. On the other hand, an inertia body 21 having a latch stopper is swingably supported to the lock gear 20. When the lock gear 20 rotates with an angular acceleration exceeding a predetermined value thereof in the belt withdrawn direction, the inertia body 21 is allowed to swing, so that the latch stopper is latched to the inner tooth 23 formed in the cover 22 fixed to the frame 2.

In addition, the torsion bar 7 is provided with a first torque transmission portion 17 which is latched so as to prohibit a relative motion with respect to the locking base 14 and a second torque transmission portion 18 which is latched so as to prohibit a relative motion with respect to the spool 4.

In addition, by an elastic force of the spring member 8, the spool 4 is constantly urged in the seat belt retracted direction through the bush 10, the torsion bar 7, the second torque transmission portion 18 of the torsion bar 7, and the bush 12. In addition, when the pre-tensioner 11 operates, the belt retracting torque generated by the pre-tensioner 11 is transmitted through the bush 12 to the spool 4, so that the spool 4 retracts the seat belt 3 by a predetermined amount.

In the conventional seat belt retractor 1 having such a construction, the seat belt 3 is entirely retracted by an elastic urging force of the spring member 8 when the seat belt is not fastened. When the seat belt 3 is withdrawn in a normal speed in order to fasten the seat belt, the spool 4 rotates in the seat belt withdrawn direction, so that the seat belt 3 is withdrawn smoothly. The tongue (not shown) slidably formed on the seat belt 3 is inserted into and engaged with the buckle (not shown) fixed to the chassis, and after that, the excessively withdrawn seat belt 3 is retracted to the spool 4 by the urging force of the spring member 8, so that the seat belt 3 is fitted to the occupant to an extent that the occupant does not feel constrained.

At the aforementioned time of emergency, the seat belt retracting torque generated by the pre-tensioner 11 is transmitted to the spool 4, and the spool 4 retract the seat belt 3 by a predetermined amount thereof to firmly restrain the occupant. On the other hand, the deceleration sensing unit 5 operates due to a large deceleration of the vehicle generated at the time of emergency, so that the lock member 6 operates. Namely, the rotation of the lock gear 20 in the seat belt withdrawn direction is prevented by the operation of the deceleration sensing unit 5, so that the pawl 13 of the lock member 6 rotates to be latched to an inner tooth 19 of a side wall of the frame 2. Accordingly, since a rotation of the locking base 14 in the seat belt withdrawn direction is prevented, the torsion bar 7 is distorted, and only the spool 4 relatively rotates in the seat belt withdrawn direction with respect to the locking base 14. After that, the spool 4 distorts the torsion bar 7 and rotates in the seat belt withdrawn direction. A load exerted on the seat belt 3 is limited by a distortion torque of the torsion bar 7, so that an impact exerted on the occupant is absorbed and lessened.

The spool 4 relatively rotates with respect to the locking base 14, so that the stopper member 16 which rotates in integration with the spool 4 relatively rotates with respect to the external thread shaft portion 15 which is engaged in a screw manner to move toward the locking base 14. When the stopper member 16 is in contact with the locking base 14, a further rotation of the stopper member 16 is prevented, so that the rotation of the spool 4 is also prevented and the distortion of the torsion bar 7 is stopped. Thus, the withdrawing of the seat belt 3 is prevented, so that the occupant is securely restrained by the seat belt 3, and the maximum distortion of the torsion bar 7 is limited, so that the disconnection of the torsion bar 7 caused from the distortion thereof is prevented.

At a time of rapidly retracting the seat belt 3, the lock gear 20 rotates with an angular acceleration exceeding a predetermined value thereof in the belt withdrawn direction, so that an inertia body 21 is allowed to swing, and thus, the latch stopper is latched to the inner tooth 23. Therefore, the locking base 14 of the lock member 6 relatively rotates with respect to the lock gear 20 in the seat belt withdrawn direction, so that the pawl 13 of the lock member 6 is latched to the inner tooth 19 of the side wall of the frame 2 as described above. Accordingly, since the rotation of the locking base 14 is prevented, the rotation of the spool 4 in the belt withdrawn direction is prevented by the torsion bar 7, so that the withdrawing of the seat belt is prevented.

Now, a characteristic construction of the seat belt retractor 1 according to the embodiment of the present invention will be described.

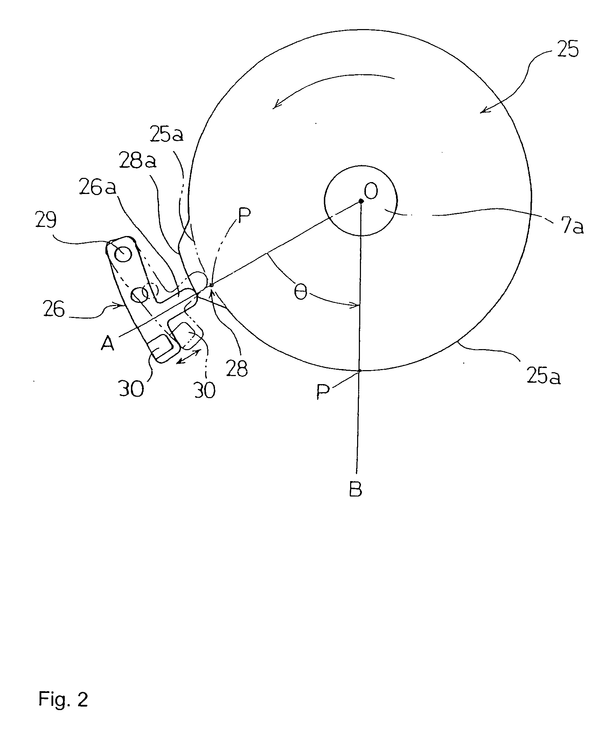

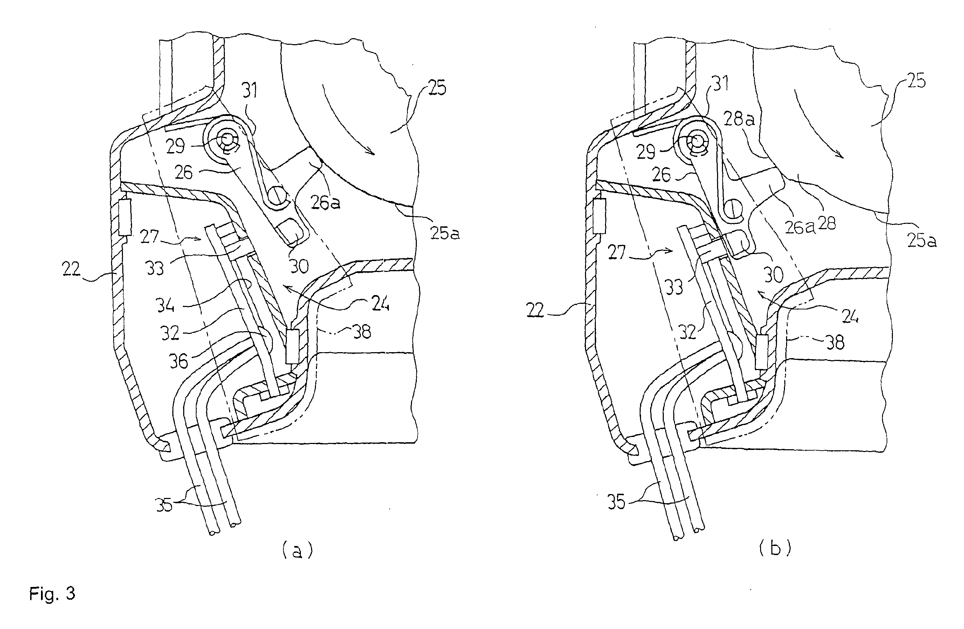

As shown in Fig. 1, the seat belt retractor 1 according to the embodiment includes a rotation angle detecting unit 24 which is disposed on the side of a cover 22 to detect a rotation angle of the protrusion shaft 7a of the torsion bar 7. As shown in Fig. 2 and Figs. 3(a) and 3(b), the rotation angle detecting unit 24 includes a rotation angle detecting cam wheel 25, a switch lever 26, and a Hall switch 27.

The rotation angle detecting cam wheel 25 is formed on the protrusion shaft 7a of the torsion bar 7 so as to rotate in integration therewith and detect a rotation displacement (rotation angle) of the protrusion shaft 7a. As shown in Fig. 2, the rotation angle detecting cam wheel 25 is formed in a shape of disc, and a convex cam 28 is formed on a portion of a circumferential surface thereof. The circumferential surface 28a of the convex cam 28 is formed to be concentric with the rotation angle detecting cam wheel 25 and be in a shape of an arc having a predetermined arc length. In addition, both ends of the circumferential surface 28a are in contact with the circumferential surface 25a of the rotation angle detecting cam wheel 25 through slanted planes thereof. In this case, curved R portions are formed between the circumferential surface 28a of the convex cam 28 and the slanted plane and between the circumferential surface 25a of the rotation angle detecting cam wheel 25 and the slanted plane so as to form smoothly continuous surfaces.

The one end of the switch lever 26 is swingably supported by the cover 22 about a swing shaft 29, and a magnet 30 is attached to the other end thereof. In addition, a protrusion 26a is formed at a predetermined middle position in the switch lever 26 between the swing shaft 29 and the magnet 30 to extend in a direction substantially perpendicular to a straight line connecting the swing shaft 29 and the magnet 30, and a distal end of the protrusion 26a has a curved surface. As shown in Figs. 3(a) and 3(b), the switch lever 26 is constantly urged by a torsion spring 31 toward the rotation angle detecting cam wheel 25. As a result, the distal end of the protrusion 26a is always in contact with the entire circumferential surface of the rotation angle detecting cam wheel 25 including the circumferential surface 25a of the rotation angle detecting cam wheel 25, the circumferential surface 28a of the convex cam 28, the slanted planes therebetween, and R portions thereof. Accordingly, when the rotation angle detecting cam wheel 25 rotates, the switch lever 26 is controlled to swing along the shape of the entire circumferential surface of the rotation angle detecting cam wheel 25. At this time, since the smoothly continuous surfaces are formed between the circumferential surface 28a of the convex cam 28 and the slanted plane and between the circumferential surface 25a of the rotation angle detecting cam wheel 25 and the slanted plane, and since the distal end of the protrusion 26a is formed to have the curved surface, the protrusion 26a can smoothly trace along the shape of the entire circumferential surface of the rotation angle detecting cam wheel 25.

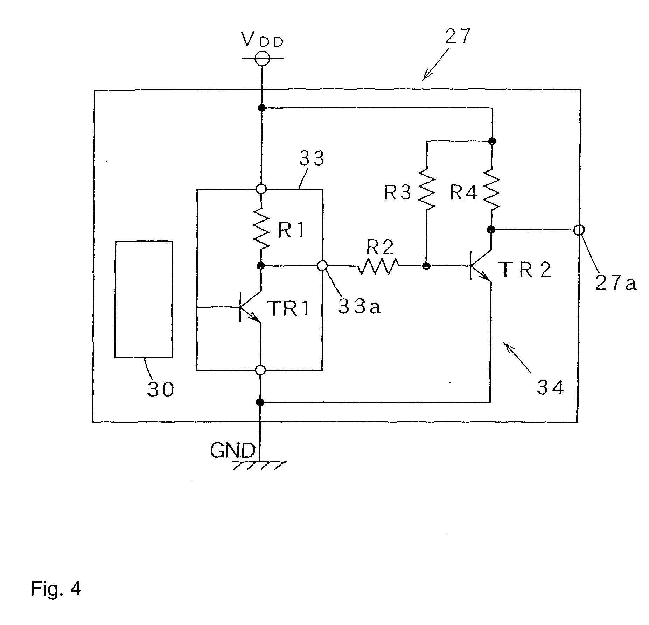

As shown in Figs. 3(a) and 3(b), the Hall switch 27 includes the aforementioned magnet 30, a board 32 attached on the cover 22, a Hall element 33 attached on the board 32, and a wiring circuit 34 which is printed on the board 32 and electrically connected to the Hall element 33. As shown in Fig. 4, for example, the Hall element 33 is constructed with a resistor R1 and a transistor TR1, and the wiring circuit 34 is constructed with three resistors R2, R3, and R4 and a transistor TR1. When the magnet 30 is separated from the Hall element 33, the transistor TR1 is not in a conductive state, so that a potential of an output portion 33a of the Hall element 33 becomes high. Accordingly, the transistor TR2 of the wiring circuit is in the conductive state, so that a potential of an output portion 27a of the Hall switch 27 becomes low. Namely, the Hall switch 27 is in the off state. On the other hand, when the magnet 30 approaches the Hall element 33 as shown in Fig. 4, the transistor TR1 is in the conductive state, so that the potential of the output portion 33a of the Hall element 33 becomes low. Accordingly, the transistor TR2 of the wiring circuit is not in the conductive state, so that the potential of the output portion 27a of the Hall switch 27 becomes high. Namely, the Hall switch 27 is in the ON state.

The Hall element 33 and the wiring circuit 34 of the Hall switch 27 are not limited to those shown in Fig. 4. Any Hall element and wiring circuit may be used which allow the Hall switch 27 to be in the OFF state so as not to output when the magnet 30 is separated from the Hall element 33 and the Hall switch 27 to be in the ON state so as to output when the magnet 30 approaches the Hall element 33.

The output portion 27a of the wiring circuit 34 for the Hall switch 27 is electrically connected to the wire harness 35 with a solder bump 36. The wire harness 35 is electrically connected to an electronic controller (not shown) of the seat belt device.

In addition, as shown in Fig. 3(a), when the distal end of the protrusion 26a of the switch lever 26 is in contact with the circumferential surface 25a of the rotation angle detecting cam wheel 25, the switch lever 16 is in a maximum rotation state in the counterclockwise direction in Fig. 3(a). In this state, since the magnet 30 is separated largely from the Hall element 33, the Hall element 33 is in the OFF state so that the Hall switch 27 is in the OFF state. On the other hand, as shown in Fig. 3(b), when the distal end of the protrusion 26a of the switch lever 26 is in contact with the circumferential surface 28a of the convex cam 28, the switch lever 26 is in a maximum rotation state in the clockwise direction in Fig. 3(b). In this state, since the magnet 30 closely approaches the Hall element 33, the Hall element 33 is in the ON sate so that the Hall switch 27 is in the ON state.

The convex cam 28 is set to a position as follows. Namely, as shown in Fig. 2, the convex cam 28 is set to a position that the Hall element 33 is in the ON state by contacting the distal end of the protrusion 26a with the circumferential surface 28a of the convex cam 28 when a point P on the circumferential surface 25a of the rotation angle detecting cam wheel 25 (a point on the circumferential surface 25a indicated by a two-dotted dashed line of Fig. 2), which is positioned on a segment OA extending radially from a rotational center O of the rotation angle detecting cam wheel 25 when the seat belt 3 is not fastened and entirely retracted to the spool 4, rotates by a predetermined angle θ to be positioned on a vertical segment OB of Fig. 2.

Therefore, the Hall switch 27 does not become into the ON state just after the seat belt 3 is retracted from the state where the seat belt is not fastened and entirely retracted to the spool 4, but the Hall switch 27 is set to be in the ON state when the seat belt 3 is retracted by a predetermined amount, that is, when the spool 4 rotates by a predetermined angle θ in the belt withdrawn direction. By doing so, it is possible to prevent the electronic controller (which simply determines that the seat belt 3 is fastened when the occupant withdraws the seat belt as much as a fastening-available amount) from erroneously determining that the seat belt 3 is fastened although the occupant does not withdraw the seat belt 3 by a fastening-available amount. Thus, the belt withdrawn amount sensing unit is constructed with the rotation angle detecting unit 24 including the Hall switch 27.

In Fig. 1, reference numeral 37 denotes a cover which is attached the cover 22 to cover the rotation angle detecting unit 24. In addition, as shown with two-dotted dashed lines in Figs. 3(a) and 3(b), a magnetic field shield member 38 is formed on the both covers 22 and 37 to cover the magnet 30 and the Hall element 33, so that the magnetic field shield member 38 can prevent influence of an external magnetic field to the Hall switch 27. In this case, instead of the magnetic field shield member 38, both covers 22 and 37 may be constructed with a magnetic field shied material.

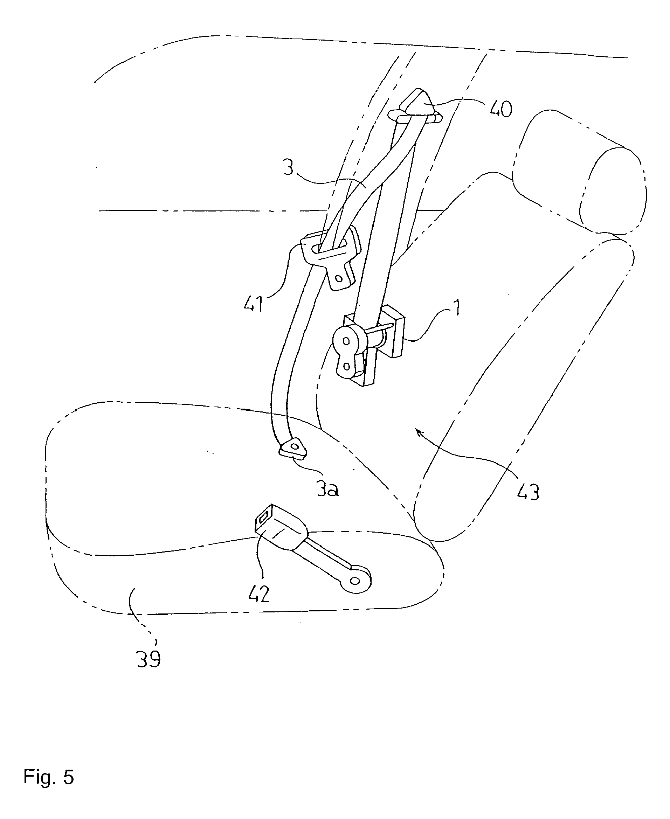

The seat belt retractor 1 according to the embodiment may be applied to a seat belt retractor used for a conventional well-known seat belt device. As an example of the well-known seat belt device, as shown in Fig. 5, there is a seat belt device 43 including a seat belt retractor 1 fixed to a chassis, a seat belt 3 which is retracted from the seat belt retractor 1 and has a belt anchor 3a formed at an end thereof to be fixed to a bottom of the chassis or a vehicle seat 39, a guide anchor 40 for guiding the seat belt 3 withdrawn from the seat belt retractor 1 to a shoulder of an occupant, a tongue 41 which is slidably supported to the seat belt 3 guided by the guide anchor 40, and a buckle 42 which is fixed to the bottom of the chassis or the vehicle seat and allows the tongue to be inserted into and releaseably engaged with.

According to the seat belt retractor 1 according to the embodiment, since the Hall switch 27 is used for the rotation angle detecting unit 24, even in a case where the Hall switch 27 is stained with contaminants, it is possible to suppress influence of the contaminants on detection of the rotation angle of the spool 4. Therefore, the rotation angle of the spool 4 can be sensed with a high accuracy in a long time use, and a reliability of the rotation angle detecting unit 24 can be improved.

In addition, the Hall switch 27 can allow a small current to flow in the OFF state where the magnet 30 does not approach. Therefore, by setting a small current, for example, 7 mA to flow in the OFF state and a relatively large current, for example, 20 mA to flow in the ON state, the belt withdrawn amount can be securely sensed, and electrical disconnection due to the disconnection of the wiring circuit 34 or the wire harness 35 or defects of the solder bump 36 at the OFF state can be securely detected. By doing so, the reliability of the belt withdrawn amount sensing can be further improved. In addition, since there is no need to use resistors unlike the aforementioned conventional case, it is possible to suppress increase in the number of parts and to reduce costs.

In addition, since the rotation angle detecting unit 24 is used as a belt withdrawn amount detecting unit, it is possible to more securely detect the fastening of the seat belt by the occupant. In addition, since the rotation angle detecting unit 24 is attached to the seat belt retractor 1 fixed to the chassis, even in a case where it is applied to the aforementioned conventional vehicle of which vehicle seat 39 is detachable from the chassis, there is no need for a connection unit for wire harness between the buckle side and the chassis side.

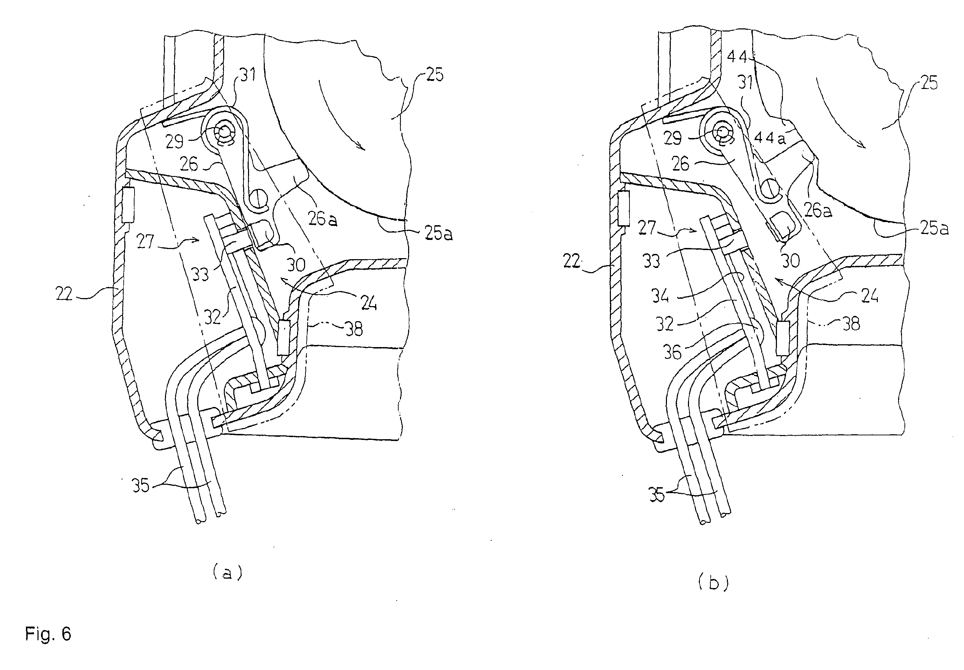

Fig. 6 is a view showing a seat belt retractor according to another embodiment of the present invention, wherein Fig. 6(a) shows an OFF state of the Hall switch same as that of Fig. 3(a), and Fig. 6(b) shows an ON state of the Hall switch same as that of Fig. 3(b). In addition, the same reference numerals denote the same elements as those of the aforementioned embodiment, and detailed description thereof is omitted.

In the aforementioned embodiment, when the magnet 30 approaches the Hall switch 27, the Hall switch 27 is set to be in the ON state so as to sense the fastening of the belt. However, in the embodiment, when the magnet 30 is separated from the Hall switch 27, the Hall switch 27 is set to be in the ON state so as to sense the fastening of the belt.

As shown in Figs. 6(a) and 6(b), in the belt withdrawn amount sensing unit according to the embodiment, instead of the convex cam 28 according to the aforementioned embodiment, a concave cam 44 is formed in the rotation angle detecting cam wheel 25 in a form completely same as that of the convex cam 28.

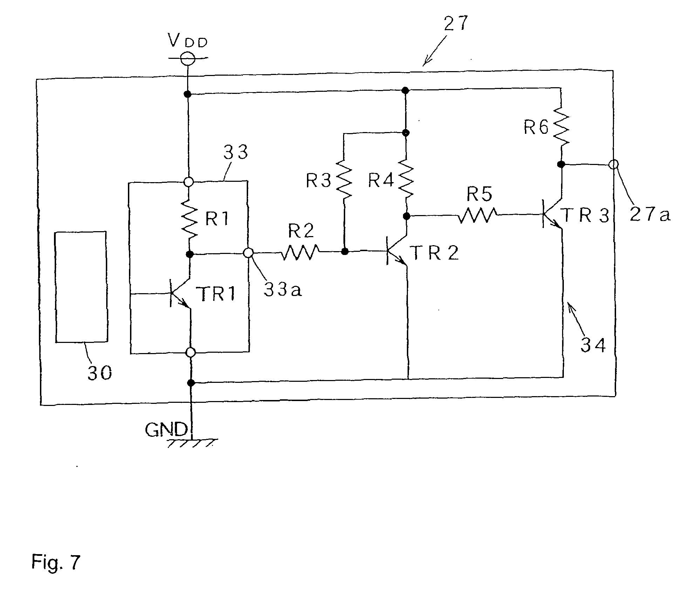

In addition, as shown in Fig. 7, the wiring circuit 34 of the Hall switch 27 according to the embodiment is constructed by additionally connecting two resistors R5 and R6 and a transistor TR3 to the output portion of the wiring circuit 34 according to the aforementioned embodiment shown in Fig. 4. When the magnet 30 approaches the Hall element 33, a potential of the output portion 33a of the Hall element 33 is lowered in a manner same as that according to the aforementioned embodiment, so that the transistor TR2 of the wiring circuit 34 is not in the conductive state. As a result, the transistor TR3 is in the conductive state, so that a potential of the output portion 27a of the Hall switch 27 decreases. Namely, the Hall switch 27 is in the off state. On the other hand, when the magnet 30 is separated from the Hall element 33, the potential of the output portion 33a of the Hall element 33 is heightened, so that the transistor TR2 of the wiring circuit 34 is in the conductive state. As a result, the transistor TR3 is not in the conductive state, so that the potential of the output portion 27a of the Hall switch 27 increases. Namely, the Hall switch 27 is in the ON state. Unlike the Hall switch 27 according to the aforementioned embodiment, the Hall switch 27 according to the embodiment is in the ON state when the magnet 30 is separated from the Hall element 33.

The Hall element 33 and the wiring circuit 34 of the Hall switch 27 are not limited to those shown in Fig. 7. Any Hall element and wiring circuit may be used which allow the Hall switch 27 to be in the OFF state so as not to output when the magnet 30 approaches the Hall element 33 and the Hall switch 27 to be in the ON state so as to output when the magnet 30 is separated from the Hall element 33.

In addition, as shown in Fig. 6(a), when the distal end of the protrusion 26a of the switch lever 26 is in contact with the circumferential surface 25a of the rotation angle detecting cam wheel 25, the switch lever 26 is in a maximum rotation state in the clockwise direction in Fig. 6(a). In this state, since the magnet 30 closely approaches the Hall element 33, the Hall switch 27 is in the OFF state. On the other hand, as shown in Fig. 6(b), when the distal end of the protrusion 26a of the switch lever 26 is in contact with the circumferential surface 44a of the concave cam 44, the switch lever 26 is in a maximum rotation state in the counterclockwise direction in Fig. 6(b). In this state, since the magnet 30 is separated largely from the Hall element 33, the Hall switch 27 is in the ON state.

Other constructions and operations of the seat belt retractor 1 according to the embodiment are the same as those according to the aforementioned embodiment, and advantages of the eat belt retractor 1 according to the embodiment are the same as those according to the aforementioned embodiment.

In addition, the seat belt retractor 1 according to the present invention is not limited to the embodiment shown in Fig. 1. Any seat belt retractor having at least a spool for withdrawably retracting a seat belt may be used.

### [Industrial Applicability]

A seat belt retractor and a seat belt device according to the present invention can be preferably used as a seat belt retractor having a belt fastening sensing unit for sensing a seat belt withdrawn amount to sense a seat belt fastened state of an occupant and a seat belt device having the seat belt retractor.

## Claims

1. A seat belt retractor (1) comprising a spool (4) for withdrawably retracting a seat belt (3) and a rotation angle detecting unit (24) for detecting a rotation angle of the spool,
wherein the rotation angle detecting unit (24) is a belt withdrawn amount sensing unit (24) for detecting a predetermined rotation angle of the spool (4) in a belt withdrawn direction with reference to an entirely retracted state of the spool (4) at a time of the seat belt (3) not being fastened, and
wherein the belt withdrawn amount sensing unit (24) comprises a Hall switch (27) which includes a magnet (30) for moving according to a predetermined rotation amount of the spool (4) in the belt withdrawn direction of the spool (4) and a Hall element (33) which is controlled to be turned on or off by the magnet.

2. The seat belt retractor (1) according to Claim 1, further comprising a switch lever (26) of which one end portion is swingably supported by a frame (2) which rotatably supports the spool (4) or a fixing member to which the frame (2) is fixed,
wherein the magnet (30) is attached to the other end portion of the switch lever (26), and
wherein the switch lever (26) is integrally and rotatably formed with the spool (4) and controlled to swing by a rotation angle detecting cam wheel (25) having a convex cam (28) on a circumference (25a) thereof, so that, when the spool (4) is in the entirely retracted state, the switch lever (26) allows the magnet (30) to be separated largely from the Hall element (33) to turn off the Hall switch (27), and at a time when the seat belt (3) is withdrawn by a predetermined withdrawn amount with reference to the entirely retracted state of the spool (4), the convex cam (28) allows the switch lever (26) to operate and the magnet (30) to closely approach the Hall element (33) to turn on the Hall switch (27).

3. The seat belt retractor (1) according to Claim 1, further comprising a switch lever (26) of which one end portion is swingably supported by a frame (2) which rotatably supports the spool (4) or a fixing member to which the frame (2) is fixed,
wherein the magnet (30) is attached to the other end portion of the switch lever (26), and
wherein the switch lever (26) is integrally and rotatably formed with the spool (4) and controlled to swing by a rotation angle detecting cam wheel (25) having a concave cam (44) on a circumference (25a) thereof, so that, when the spool (4) is in the entirely retracted state, the switch lever (26) allows the magnet (30) to closely approach the Hall element (33) to turn off the Hall switch (27), and at a time when the seat belt (3) is withdrawn by a predetermined withdrawn amount with reference to the entirely retracted state of the spool (4), the concave cam (44) allows the switch lever (26) to operate and the magnet (30) to be separated largely from the Hall element (33) to turn on the Hall switch (27).

4. A seat belt device comprising at least: a seat belt retractor (1) for retracting a seat belt (3); a tongue (41) which is slidably supported by the seat belt (3) withdrawn from the seat belt retractor (1); and a buckle (42) which the tongue (41) is releaseably engaged with,
wherein the withdrawal of the seat belt (3) is prevented by the seat belt retractor (1) at a time of emergency, thereby restraining an occupant, and
wherein the seat belt retractor (1) is the seat belt retractor (1) according to any one of Claims 1 to 3.
